# NEW EUROPEAN PATENT SPECIFICATION

(11) **EP 2 903 416 B2**
(45) Date of publication and mention of the opposition decision: **21.08.2019**
(45) Mention of the grant of the patent: 02.11.2016
(21) Application number: 13715774.9
(22) Date of filing: 15.03.2013
(51) Int. Cl.: A01J 5/007, A01J 5/013, A01K 1/12

(54) **AUTOMATIC MILKING ARRANGEMENT**
AUTOMATISCHE MELKANORDNUNG
SYSTÈME DE TRAITE AUTOMATIQUE

(30) Priority: 04.10.2012 GB 201217820; 04.10.2012 US 201261709399 P
(43) Date of publication of application: 12.08.2015
(73) Proprietor: DeLaval Holding AB, 147 21 Tumba (SE)
(72) Inventor: ANGLART, Dorota, S-147 70 Grödinge (SE); BOSMA, Epke, NL-8744 EN Schettens (NL); FORSBERG, Mats, S-749 60 Örsundsbro (SE); HÄLLMAN, Jonas, S-184 38 Åkersberga (SE); LUNDH, Andrés, S-155 93 Nykvarn (SE); PERSSON, Staffan, S-147 32 Tumba (SE); ÖHMAN, Ulrika, S-129 40 Hägersten (SE)
(74) Representative: Lilliehorn, Tobias
(86) International application number: PCT/SE2013/050269
(87) International publication number: WO 2014/055002

(56) References cited:
- EP-A2- 1 336 337
- WO-A1-01/93667
- WO-A1-2008/051135
- WO-A1-2008/140407
- EA-A1- 200 700 753
- RU-C2- 2 340 171
- RU-U1- 100 701

## Description

This invention is concerned with automatic milking, that is milking carried out entirely automatically and without requiring any steps to be performed or controlled manually either to extract the milk from the udder of an animal eligible for milking or in the handling of the milk yielded by an animal until it has been delivered to a bulk milk collection tank. Automatic milking arrangements are known and generally comprise a milking stall with entry and exit gates, a feed trough for feeding food concentrate to an animal in the stall, and a robot arm for attaching teat cups to the teats of an animal standing in the milk stall. These known automatic milking arrangements work very satisfactorily, but it has been observed that requiring an animal to stand in a milking stall and therefore to be separated from other herd members can lead to the animal experiencing some anxiety, which is not conducive to efficient milk let down. In addition, the animals are required to make their own way to the milking stall, which means allowance must be made in the animal accommodation for the necessary animal movements, sometimes referred to as the animal traffic. Queues of animals awaiting access to a milking stall can lead to problems. With a view to addressing these issues it has been suggested to mount the milking equipment on one or more self-propelled mobile robot devices, and to provide a navigation system to enable the mobile devices to move around in the animal accommodation to find and milk an animal eligible to be milked, and to take the milk yielded by the animal to an emptying station at which the collected milk is transferred from a storage vessel on the mobile device to a bulk storage tank. Thus, EP1188367A1, EP1336337A1 and EP 1523878A1 describe constructions in which a mobile robot device has all the milking equipment, including the teat cups, milk storage vessel, vacuum pump and mechanism for attaching the teat cups, integral with the robot device.

EP1336337A1 discloses the preamble of claim 1.

EP152878A1 also describes a construction in which one mobile robot device is designed to carry the teat cups, the milk storage vessel and vacuum pump, whereas another mobile robot device carries a robot arm which is used to connect the teat cups to the teats of the animal. These constructions are also described in EP1523879A1, EP 1523880A1, EP 1523881A1 and EP 1523882A1 which disclose in addition rotating feeding platforms with which the mobile robot devices can be used. Although these proposals overcome the perceived drawbacks of having a stationary automatic milking stall, they are not without limitations of their own.

The previously proposed mobile robot devices have rechargeable batteries that are used to supply power to the motors which drive the wheels that propel the devices, and to supply all the power for operating the milking equipment carried by the mobile robot devices. As a consequence there is a large energy requirement so the batteries need to be large and they will require frequent recharging. Furthermore, the mobile devices are unavailable for milking animals during battery recharging periods since the recharging is done at a station remote from where the animals are milked, which means more mobile robot devices are needed in an installation intended for a given number of animals than would be the case if the mobile devices were available for use in milking animals for a greater percentage of time, and this of course has a cost implication. In addition, when all the milking equipment is provided on the mobile robot devices this adds to weight of the mobile devices and hence the energy expended in connection with the mobile devices moving around.

Another limitation when all the milking equipment is carried by one mobile robot device is that the entire mobile device, including apparatus that may be needed only in the initial stages of milking, such as the self-propelled device itself, a robot arm for attaching the teat cups, or a teat cleaning device for cleaning the teats, must remain at the location of the animal being milked until the milking is completed. As a result valuable equipment is tied up without being used for significant periods of time and during these periods it is unavailable for use in connection with milking other animals. In addition the mobile robot devices carrying the milking equipment travel over the floor, which is often soiled with animal manure in the animal accommodation, which means the equipment is in risk of becoming contaminated so that the mobile devices may need to be washed often to minimise risk of animals and also the milk becoming contaminated or infected through contact with dirty equipment.

One drawback of the previously known automatic milking arrangements with stationary stalls is that the same milking equipment is used for milking all the animals that visit the milking stall. This means the milking equipment, at best, is chosen as the best compromise for all the animals of the herd, and the chosen equipment will be less than optimum for most members of the herd. The aforementioned publications that disclose mobile robot devices carrying milking equipment do not acknowledge this drawback or teach any solution to it.

When the mobile robot devices have to deliver the milk collected from each animal separately to the emptying station for transfer to the bulk milk tank, there are many journeys that the mobile robot devices need to make, with implications to the energy consumption and the availability of the mobile devices for use in milking animals, as already touched on above.

It is generally necessary to check the quality of milk obtained from the udder of an animal before it is passed into a bulk milk collection tank in which the milk from several animals becomes mixed together. In EP 1523878A1 which has already been mentioned above, a mobile robot device is described as being provided with milk-analysing means, but no further information is given about the form of the milking analysing means. It is known to use milk conductivity, milk colour and/or milk temperature sensors to detect milk affected by mastitis, but traditionally more thorough analysis of the milk composition is carried out on a regular basis, such as on milk samples collected one day every month, in a laboratory remote from the milking site due to complexity and cost of the analysis equipment required. The analysis is necessary to determine the quality and hence value of the milk and in addition provide important feedback for herd management purposes, especially for deciding on the food rations for animals on an individual basis.

When animals are free to move around in an animal accommodation and to choose when to visit feeding stations, milking stalls and resting areas, individual animals can be difficult to locate. As a consequence, if data acquired from milking, or at the time of milking an animal for instance indicates that it would be appropriate to inspect the animal or to give it some kind of treatment, it can be time consuming for a person to locate the animal in question within the animal accommodation, which means inefficient use of that person's time. In WO 01/93667 it has been proposed to notify a supervisor when an animal already designated in a database as requiring attention is identified at a milking or feeding station, but such an arrangement can still mean significant delay from an animal being found to require attention, or being suspected of being need of attention, and the animal being actually located so that it can be inspected and attended to as needed.

The present invention is based on a recognition of these limitations and sets out as its broad objective to provide a more effective automatic milking installation employing self-driven robot devices. As a primary objective, however, the invention sets out to provide for identification of an animal requiring attention or inspection, and easy location of such an animal.

In accordance with a main aspect the present invention provides an automatic milking arrangement as defined in claim 1, the arrangement comprising milking locations accessible to individual animals, a self-driven device with a remote controlled guidance system for taking to a milking location apparatus for use in automatically milking an animal located at the milking location, retaining means for automatically retaining an animal in the milking location during the milking of the animal and automatically releasing the animal to allow the animal to leave the milking location after the milking of the animal has finished, a device for determining from the milk yielded by the animal milked at the milking location whether the milked animal requires attention or should be inspected, the retaining means being controlled so that the milked animal is retained at the milking location and is not automatically released when it is determined the animal requires attention or should be inspected, and the self-driven device and milking apparatus being movable away from the milking location when the animal is retained by the retaining means.

By a self-driven device it is meant a self contained robot device with an energy supply, and a driving means for causing the device to move using energy drawn from the energy supply. The self-driven device is without physical constraints limiting its movement or range. In other words the self-driven device is not tethered in any way, such as by either a mechanical linkage to a fixed point or by electric, cables or flexible pipe-lines. A remote controlled guidance system means a control means that is able to operate the device at least to move and steer the device automatically in accordance with commands transmitted from a control centre. A command may be a signal simply specifying a destination to which the self-driven device is to drive itself, the movement and steering then being controlled by a control arrangement onboard the self-driven device. Alternatively or additionally commands to control the movement direction and speed can be issued from the control centre. The control centre can include a route planning system to determine an at least approximate path to be taken by the self-driven device to reach a certain destination. From the control centre data may also be transmitted concerning a particular animal to be milked, such as eligibility for milking, expected milk yield, teat position data, and the like, and any other control data that may be more conveniently, easily or effectively determined centrally rather than by control means provided at the self-driven devices or at milking equipment transported thereby. The control centre can for instance include a database for storing individual animal related data and may receive data obtained during milking an animal, which milking data may be transmitted by the self-driven device and/or milking equipment.

The automatic milking arrangement of the present invention has the advantage that an animal suspected, on the basis of milking information or data, of being sick or injured and therefore requiring attention, or at least deserving inspection, can quickly and easily be located by a supervisor so that the animal condition can be confirmed and if necessary appropriate treatment can be administered. Furthermore, keeping the animal at the milking location does not mean that the milking of other animals has to be delayed, which would be a significant inconvenience, because it is possible for milking equipment used to milk the retained animal to be taken by the self-driven device to another milking location where a different animal due to be milked is located.

In a preferred construction the retaining means is controlled so that, when an animal is retained and is not automatically released, the milked animal is retained at the milking location until released by an operator-initiated action, such as a command entered onto a control device by a manual operator action or as a voice activated command. A signal generating device can be arranged to produce an attention signal for drawing the attention of a supervising person to a milked animal being retained and having not been automatically released.

The device for determining if a milked animal requires attention or should be inspected comprises a sensing device for determining or measuring a milk characteristic, for example milk temperature, milk conductivity, milk flow rate and/or milk colour, in the course of milking the animal. In an especially effective arrangement a milk analysing means is provided for analysing the composition of the milk and it is determined from the results of the milk analysis if the milked animal requires attention or should be inspected. The retaining means are then controlled so that a milked animal can not be automatically released from the milking location until the analysis of the milk yielded by the animal has been completed. The analysing means is conveniently disposed at a milk analysis station remote from the milking location, and more particularly the analysis station can be a common analysis station for analysing milk yielded by animals milked at any of the milking locations. The apparatus taken to the milking location by the self-driven device can comprise a milk receiver in which the milk yielded by the milked animal is taken from the milking location to the analysis station. The milk receiver can be connectable automatically to the analysis station for the milk to be analysed before being transferred to a bulk milk collection tank in which milk obtained from several animals is stored.

In an especially efficacious embodiment of the invention, the device for determining if the milked animal requires attention or should be inspected comprises a sensing device included in the milking apparatus for determining at the milking location a characteristic of the milk yielded by the animal, and a milk analysing means disposed at a milk analysing station remote from the milking location, the sensing device providing a signal indicating either that the milked animal can be automatically released by the retaining means or that the milked animal should be retained at least until the milk yielded by the milked animal has been analysed by the milk analysing means, and based on the results of the milk analysis by the milk analysing means determining whether a milked animal which has been retained can be automatically released or should continue to be retained. An automatic milking arrangement configured in this way has the advantage that milked animals can be automatically released as soon as it has been determined that no attention or inspection is needed, and hence the milking locations can be vacated ready to accommodate other animals to be milked without having to wait each time for a full analysis of the milk to be completed.

An automatic milking arrangement according to the invention can additionally comprise a camera device for viewing the teats of an animal located at a milking location and detecting traumas, such as skin injuries or inflammation of a teat, the retaining means being controlled to retain the milked animal at the milking location if an injury or inflammation of a teat is detected, and not to automatically release the animal. The camera device can conveniently comprise a camera which is taken to the milking location by the self-driven device along with the apparatus used to milk the animal.

The provision of an analysis station in the milking arrangement allows frequent detailed analysis of milk in connection with the milking operating without causing significant delays in the milking of animals that would result if, after the milking of a first animal, the milking of a second animal could not be initiated until after an analysis of the milk yielded by the first animal had been completed. With an analysis station, which can be a distinct and dedicated station at which an analysis of the milk composition can be performed, the milk can be taken to the analysis station in the milk receiver in which the milk is collected at the milking location and the milk receiver can remain at the analysis station for the time needed to complete the analysis while the milking of other animals, for example using milking equipment transported by other self-driven devices, can still go ahead during this time. Thus, frequent milk analysis, even analysis of the milk yielded by each animal every time it is milked, is possible without seriously delaying or inconveniencing the milking process. Also, with the analysis being carried out at the automatic milking arrangement rather than at a remote laboratory the analysis results will be available without any appreciable delay and actions can be taken rapidly in response thereto, such as to adjust the food intake of the animals.

The milking arrangement can include a discharge station at which milk is emptied automatically from the milk receiver and the discharge station can be combined with or constituted by the analysis station. Alternatively it can be separate from the analysis station, in which case the milk receiver can be movable from the analysis station to the discharge station by the self-driven device, preferably so that the milk is emptied from the milk receiver when the analysis has been completed and the appropriate destination for the milk, i.e. the bulk milk collection tank or a drain or another tank intended for poor quality milk, has been determined from the analysis results.

The analysing station includes an analysing means for analysing the composition of the milk and its constituents, such as to determine the percentage or amounts of fat, proteins, leucoytes, casein, lactose, albumin, urea, enzymes, such as NAGase (n-acetyl-D-glucosaminidase) and/or somatic cells.

A thorough comprehensive analysis of the milk constuents of interest can take a significant time, in particular many minutes, to complete, and requires complex equipment. Use of dedicated equipment at an analysis station at which milk is taken by self-driven devices is a very efficient and cost effective solution in facilitating an early analysis of milk soon after the milking of the animals. The quicker the analysis results are available the sooner the farmer is able to take appropriate steps in response to those results, for example with regard to food rations, etc. The milk receiver in which milk is taken to the analysis station can remain at this station until the analysis has been completed. Alternatively a temporary milk holding tank can be provided at the analysis station and the milk can be transferred automatically into the holding tank and be held there until the analysis is finished. This alternative has the advantage of freeing up the milk receiver so that it is available sooner for use in connection with the milking of another animal. If the milk is determined to be of acceptable quality it will be transferred from the holding tank to the bulk collection tank.

A dumping station can be provided to which the milk receiver can be taken by the self-driven device and at which the milk can be emptied automatically from the milk receiver and directed to drain or another tank different to the bulk milk collection tank, which will be appropriate if it is determined that the milk is not suitable for delivery to the bulk collection tank. For example a separate tank can be provided to receive colostrum milk emptied automatically from the milk receiver. If desired a milk quality checking means may be provided for performing a relatively crude preliminary check on the milk, such as by sensing milk conductivity, milk colour and/or temperature, for detecting milk that is not suitable for transfer to the bulk collection tank, for example because it is infected with mastitis, before the milk receiver is taken to the analysis station. In this way an unnecessary comprehensive analysis of mastitis infected milk can be conveniently avoided. As mentioned above such quality checking means can also serve to determine that an animal requires attention or should be inspected and is to be retained at the milking location.

At the discharge station a diverting device, such as a valve device, can be provided for diverting milk of unacceptable quality for delivery to the bulk milk collection tank to the separate tank or to drain.

In one embodiment of the invention the milk receiver is fixedly mounted to the self-driven device, possibly along with other milking equipment, which can be advantageous in simplifying the construction of the self-driven device and the milking equipment integrated with it. In another embodiment the milk receiver, one or more teat cups and possibly other equipment used in milking an animal are incorporated in a milking unit that is transportable by, but separable from the self-driven device so that the self-driven device is not required to remain with the milk unit throughout the milking of an animal.

In a preferred embodiment of the invention, the self-driven device is arranged for taking to the milking location apparatus comprising milking equipment including the milk receiver and one or more teat cups, a connecting means for connecting the teat cup(s) to the teats of an animal at the milking location, and a first coupling arrangement which is automatically engageable with a complementary second coupling arrangement provided at the milking location thereby to connect the apparatus to at least one line used by the apparatus in the course of milking the animal. Such a construction has the advantage that it can reduce the energy demands made on the on-board energy supply of the self-driven device. The at least one line to which connection can be made at the milking location can comprise one or more supply lines selected from an electricity supply line, a compressed air supply line, a vacuum supply line, a water supply line, a cleaning liquid supply line, and a supply line for a teat treatment liquid. An electricity supply line can deliver electric current for operating the milking equipment, a robot arm or other means for connecting teat cups to the teats of an animal. An electricity supply line can also or alternatively supply electric power for recharging batteries. Another possibility is to use power supplied through an electricity supply line to operate means for disconnecting the teat cups from the teats of the animal, such as by retracting the teat cups by pulling on the milk tubes or other flexible elongate elements attached to the teat cups.

A vacuum supply line can be used for supplying milking vacuum to the teat cups, whereby the self-driven device is not required to bring a vacuum pump to the milking location so that a weight saving can be made and the milking equipment taken to the milking location by the self-driven device can be less complicated. The vacuum can be supplied to the teat cups through the milk receiver which can conveniently serve as a vacuum balance tank as well as a storage vessel for the milk obtained from an animal.

A supply line for teat cleaning liquid can be used to deliver such liquid to a teat cleaning device, whereby the self-driven device will not be required to convey the teat cleaning liquid to the milking location. A supply line for compressed air can supply pressurised air to a teat drying device so that the self-driven device will not need to take an air pump to the milking location. A supply line for a teat treatment liquid can supply such liquid to a means, such as a spray device, for applying a teat treatment liquid to the teats of the animal after milking, so that the self-driven device is not required to convey the teat treatment liquid to the milking location or a pump or the like for pressuring the liquid and spraying the liquid onto the teats. A supply line for water can supply water for washing the milking equipment, in particular rinsing the teat cups before and/or after milking an animal. With such an arrangement the self-driven device does not need to take water along with the milking equipment or to take the milking equipment to another station for rinsing the teat cups after each milking of an animal.

The at least one line to which connection can be made at the milking location can comprise a delivery line to be used for conducting to a drain foremilk collected during premilking an animal, used teat cleaning liquid, and/or used rinsing water.

The coupling arrangements preferably comprise a locking mechanism to prevent unintentional premature uncoupling, and a releasing device can be actuable to unlock the locking mechanism. The releasing device can be included in the apparatus delivered by the self-driven device. The first and second coupling arrangements can be configured for push-in engagement with each other to simplify the coupling operation, such as by a straightforward movement of the first coupling arrangement towards the second coupling arrangement, which can conveniently be produced by the self-driven device. Conveniently a guide means guides the first coupling arrangement into engagement with the second coupling arrangement as they are moved together.

Whilst the self-driven device can comprise an energy source and a drive motor connected to the energy source for driving the device along within the animal accommodation, the apparatus taken to the milking location by the self-driven device is preferably isolated from the energy source so as not to consume energy from that source, or to take in the course of milking an animal only a minor portion of the energy that is needed for milking the animal from that source. The energy source is conveniently an electric storage battery, but a fuel cell is another possibility. The drive motor can be an electric motor, or if preferred an hydraulic motor actuated by an electrically driven pump.

The self-driven device can be supported on the floor by any suitable means that permits self-driven movement and steering of the device, including ground-wheels, rollers and/or tracks. At the milking location a docking arrangement can be provided for cooperation with a complementary arrangement included on the self-driven device, on the separable milking unit, if provided, for setting the position of the latter and aligning the first and second coupling arrangements to facilitate their engagement.

In a preferred automatic milking arrangement according to the invention, the milk receiver is fixedly mounted to the self-driven device, which can be beneficial in permitting a simple construction of the self-driven device with its own milk receiver. Another possibility, however, is for the milk receiver to be separable from the self-driven so that the self-driven device can move away and leave the milk receiver at the analysis station, or the discharge station, after taking the milk receiver to that station. An advantage of this arrangement is that the self-driven device becomes available for taking another milk receiver to a milking location, or for collecting a milk receiver from a milking location, and it is not constrained to remain at all times with the milk receiver. As already mentioned above the milk receiver can form part of a milking unit that also comprises teat cups connected to the milk receiver. The first coupling arrangement can also be incorporated in a milking unit that is separable from the self-driven device. In a simple arrangement the milking unit comprises a trailer unit arranged to be towed from place-to-place by the self-driven device. A more preferred arrangement is one in which the milking unit is demountable from the self-driven device, the milking unit being arranged to be carried by the self-driven device for transportation to the milking location, which allows the milking unit to be maintained clear of the floor to help ensure a sanitary condition of the milking equipment at least until it is delivered to the milking location where the milking unit will be unloaded from the self-driven device, which can then be used for other work tasks, such as transporting other milking units while an animal is milked at the milking location. The milking unit can also be separated from the self-driven device at the analysis station. The milking unit may be capable of being lifted off of the self-driven device, and possibly also back on to the self-driven device, and the self-driven device may be equipped with a robot arm which can be used for lifting the milking unit off of the device. Of course the robot arm can also be used for connecting the teat cups of the milking unit to the teats of an animal to be milked by the milking unit.

In another possible construction the milking unit has rolling elements or skid elements for the milking unit to roll or slide away from the self-driven device when being separated therefrom. In addition the self-driven device may be provided with a ramp member deployable for unloading the milking unit from the self-driven device onto a support structure at the milking location or at the analysing station. The ramp member can be beneficial when the supporting structure is at a level or height different to that at which the milking unit is carried on the self-driven device.

To assist the positioning of the milking unit at the milking location or analysing station the supporting structure may comprise a positioning means engageable with the milking unit which can be equipped with a releasable mechanism to secure the milking unit to the positioning means. Establishing a secure predetermined position of the milking unit can facilitate engagement of the coupling arrangements as will become clear, and may additionally assist attachment of the teat cups to the teats of an animal to be milked by setting an initial position of the teat cups.

A teat cleaning device can be included in the milking unit, but in a more preferred arrangement the self-driven device comprises a teat cleaning device. When the self-driven device comprises a robot arm and a teat cleaning device, it can deliver the milking unit and unload it at the milking location, clean the teats of the animal at the milking location, pre-milk the teats, attach the teat cups of the milking unit to the teats of the animal, and then move off leaving the milking unit to carryout the actual milking. The self-driven device can be used for other duties, such as transporting other milking units while the milking takes place. In fact the self-driven device may be capable of transporting two or more milking units at the same time for transportation in turn to respective milking locations. When the milking of the animal has finished and the teat cups have been detached from the teats of the udder of the animal the milking unit will be ready for conveyance of the milk receiver and the milk collected therein to the analysis station or possibly directly to a discharge station if no analysis of the milk is to be carried out. The milking unit can include a milk flow sensor for detecting flow of milk from the teat cups for determining when milking is to be ended, in a manner generally known per se. As also known per se the milk receiver may comprise a plurality of collection chambers for receiving the milk yielded by the respective teats of the udder of the animal.

The milking unit may be retrieved from the milking location by the same self-driven device that transported the milking unit to the milking location or by another similar self-driven device of the automatic milking arrangement.

Alternatively a different self-driven device with a remote controlled guidance system may be provided and employed for this purpose and serve as a milking unit collecting device. This device may be similar to the first type of self-driven device, but does not need to be equipped with any teat cleaning device or teat cup attaching mechanism. A further alternative is for the milking unit to be mobile and to be equipped with a remote controlled guidance system so that it can drive itself to the analysis station.

The automatic milking arrangement of the present invention may entail a milking equipment module selected from a number of different milking equipment modules being taken to the milking location where a particular animal is to be milked. The selected milking equipment module has at least one element with a characteristic parameter which is different from that of the corresponding element(s) of the other different milking equipment modules. By such an arrangement a milking equipment module best suited to the particular animal, as opposed to a best compromise for an entire herd of animals, can be chosen, ideally from a range of several different milking equipment modules. Processing means can be arranged to determine or select the milking equipment module to be taken to a milking location to milk the animal there, based on data relating to that animal stored in a database. In a particular embodiment the at least one element comprises a teat cup fitted with a teat cup liner, and the different milking equipment modules have teat cup liners with different configurations, more especially with different size and/or shape characteristics, such as different teat chamber lengths and/or different teat opening diameters. It will be appreciated that in an automatic milking arrangement according to the invention a range of several different milking equipment modules can easily be provided with different teat cup liners allowing every animal to be milked using teat cups with the most appropriate liners for that individual animal. In this way milking conditions can be optimised for each animal. A milking equipment module may comprise equipment integrated with a self-driven device or may be a milking unit transportable by and demountable from a self-driven device.

According to a further embodiment the milking equipment modules can differ in the maximum milk capacities of their milk receivers. Processing means can be provided and select the unit of milking equipment to be taken to a milking location based on the expected milk yield of the animal at the milking location and the maximum capacity of the milk receiver.

It is possible in an automatic milking arrangement according to the invention for the milking equipment to comprise a milk receiver with sufficient capacity to accommodate the milk yielded by two or more animals so that two or more animals may be milked before the milking unit or self-driven device comprising the milk receiver must be driven to the analysis station or milk discharge station. Journeys of the self-driven devices can thereby be reduced and demands on their stored battery energy or fuel supply correspondingly reduced. A route planning system is preferably included for the self-driven device to take the milking equipment from one milking location after milking an animal at that location to a second milking location for milking another animal at the second milking location before the milking equipment is taken to a discharge station for emptying the milk receiver.

The route planning system which is most effectively located at the central control can be programmed to select a plurality of animals to be milked with the same milking equipment according to the milking locations at which the animals are located, with a view to reducing or minimising travelling distances and/or travelling times of the self-driven device. The route planning system is preferably arranged to take into account the expected milk yields of the animals to be milked. The route planning system may select a second animal to be milked based on the milk capacity in the milk receiver remaining after a first animal has been milked, and the expected milk yields of further animals eligible for milking. Alternatively the route planning system can be arranged to control the milking equipment to interrupt the milking of an animal a little sooner than would otherwise be the case so that sufficient capacity remains available in the milk receiver to accommodate the milk expected to be yielded by another animal to be milked. Furthermore, the route planning system may be arranged to direct the self-driven device successively to milking locations at which are respectively located animals anticipated to yield milk which is unsuitable for delivery to a bulk milk tank intended for good quality milk, such as milk suitable for human consumption. In this way risk of mixing in the milk receiver good quality milk with milk of poor quality can be avoided.

An automatic milking arrangement according to the invention can include an additional self-driven device or milking unit designated for milking an animal when the milk to be yielded is not expected to be of acceptable quality for delivery to a bulk milk collection tank. Processing means comprised by the control equipment can be programmed for selecting the additional milking unit to be taken to the milking location when data stored in a database and relating to the individual animals indicates that the milk obtained from the animal to be milked is not to be delivered to the bulk milk collection tank. By designating one milking unit for milking sick animals for example the risk of cross infection can be reduced. Also, a milking unit specifically designated for low quality milk may not need to be cleaned as often as other milking units.

An automatic milking arrangement of the invention includes a control system for determining and directing self-driven device movements. The control system may comprise a processor for transmitting data designating the location of an animal to be milked, and a transmitter/receiver carried by the self-driven device for receiving the transmitted data for the guidance system to control the self-driven device to drive to the designated location. The control system can include a map of the area of the animal accommodation within which the self-driven device is movable.

The guidance system may function in cooperation with antennae located in fixed positions distributed around or over an area covering the required range of movement of the self driven device so that the self-driven device can be guided based on signals transmitted from the antennas and received by the self-driven device. Alternatively or in addition stationary elements that trace paths of movement for the self driven device can be provided in the animal accommodation and the guidance system can guide movement of the self-driven device by detecting and following the paths defined by the stationary elements. Other forms of navigation systems are also possible and will occur to those skilled in the art.

The automatic milking arrangement of the present invention is suitable for use in different kinds of animal installation. It can, for example, be advantageous when used in a loose house accommodation in which animals are free to walk into and away from stationary feeding stations, and a rotary feeding parlour installation equipped with a rotating platform having feeding stations for the animals, and zones disposed around the rotating platform at which animals can move onto and off of the rotating platform. In a loose house accommodation, and in a rotary feeding parlour installation, at least some feeding stations are designated milking locations and are equipped with a retaining means for keeping an animal at the feeding station at least until it has been milked and its milking is finished. Such retaining means are known per se and may comprise for example a neck-lock device disposed adjacent a feed trough. Each milking location can have associated therewith a second coupling arrangement for engagement by a first coupling arrangement of the self-driven device or milking unit, if provided, for connection of the milking equipment to a supply or delivery line. Two adjacent feeding stations/milking locations can conveniently share a common second coupling arrangement positioned to enable an animal in either of the two adjacent stations to be milked by an apparatus having its first coupling arrangement engaged with said common second coupling arrangement. In this case the milking apparatus, whether incorporated in a self-driven device or a milking unit delivered by the self-driven device, may comprise two sets of teat cups so that animals located in the two adjacent stations can be milked at the same time, and the two sets of teat cups can deliver milk from the two animals into either a common milk receiver or respective milk receivers. A loose house accommodation may comprise several feeding stations disposed side-by-side in a linear array, and the rotary feeding platform accommodation way comprise several feeding stations disposed in an annular array, e.g. so that animals occupying the feeding stations face generally towards the centre of the platform, and the self-driven device can then be movable along the array of feeding stations, behind the animals standing therein, to approach an animal occupying a milking location and to be milked. With a rotary platform the self-driven device may be moveable onto and off of the platform to approach an animal to be milked and subsequently to move away from a milking location to the milk analysis station which is not on the rotating platform and is remote therefrom.

An animal identification system, as well known per se, can be provided for identifying animals occupying the feeding locations, and a computer system can be provided to determine whether or not an animal identified at a milking location is eligible to be milked, for example based on the time since the last previous milking of that animal, or based on its on its expected milk yield which will depend on the time since the last previous milking and the rate of milk development in the udder which can be calculated from historical data concerning the previous milkings of that particular animal. Means can be provided to identify an animal approaching a feeding station that is not designated a milking location, and to bar or discourage entry of the animal to that feeding station if the animal is eligible to be milked, or will become eligible to be milked with in a predetermined time period. In this manner it can be assured that an animal that is eligible to be milked, or perhaps will become eligible to be milked within a short time, say within the next 30 minutes or 1 hour, will be encouraged to feed at a feeding station that is designated a milking location whereat the animal may be milked whilst it is feeding. Similarly means may be provided to identify an animal approaching a feeding station which is designated a milking location and to bar or discourage entry of an animal to that feeding station if the animal is not due to be milked, or will not become eligible to be milked within a predetermined time. In this way it can be assured that feeding stations that are designated milking locations will not become filled up with animals not yet ready to be milked and as a result be unavailable to other animals which are eligible for milking. By taking measures to ensure that feeding stations designated milking locations will remain free to be occupied by animals that are ready to be milked, it may be possible to reduce the number of milking locations within an installation without compromising the overall milking capacity in terms of the number of animals that the automatic milking arrangement is capable of handling. Entry of an animal into a feeding station can for instance be barred or discouraged by an obstructing means, such as a barrier or post that is moveable between a retracted position and an operative obstructing position.

It will be appreciated that the automatic milking arrangement according to the invention can comprise many variations, including in terms of the numbers and specific forms of self-driven devices incorporated therein.

Even with a very small number of animals the number of self-driven devices will be at least two so that one self-driven device remains operable for milking when another self-driven device is not available, for example because it is at the analysis station for milk taken there to be analysed or it is receiving attention at a servicing station whereat operations need to be carried out periodically, such as washing, battery recharging/refuelling, or the like are performed. In most cases there will be several self-driven devices.

Some embodiments of the invention incorporated in installations intended for cows will now be described with reference to the accompanying drawings, but it is to be understood that the invention is also applicable to arrangements for milking other kinds of lactating animals, such as goats, sheep and buffaloes.

In the drawings:-
Figure 1 is a schematic illustration of a self-driven device with integrated milking equipment suitable for use in an automatic milking arrangement according to the invention;
Figure 2 is a schematic plan for an animal accommodation in which an automatic milking arrangement according to the invention is provided;
Figure 3 is a similar schematic plan for an animal accommodation in which an automatic milking arrangement according to the invention is provided;
Figure 4 shows a modified form of self-driven device with a demountable milking unit;
Figure 5 shows in end elevation a feeding station of an automatic milking arrangement according to the invention;
Figure 6 illustrates one form of loose house animal accommodation provided with an automatic milking arrangement according to the invention; and
Figure 7 illustrates another form of loose house animal accommodation including a rotating platform, provided with an automatic milking arrangement according to the invention.

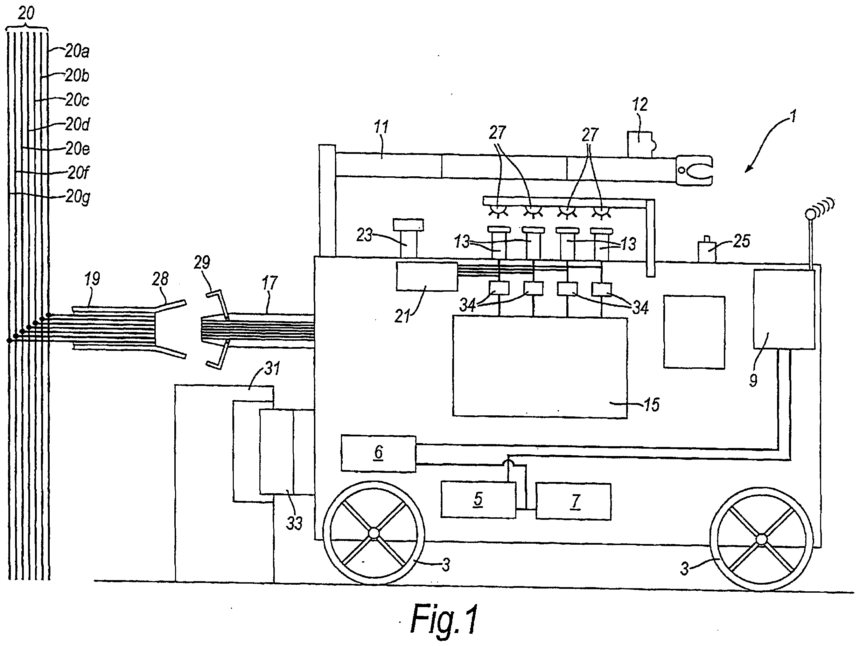

Illustrated schematically in Figure 1 is a first form of self-driven device 1 for an automatic milking arrangement. The self-driven device includes a chassis with ground engaging wheels 3, a motor 5 for driving at least some of the wheels, and a mechanism 6 for steering the wheels to set the direction of travel when the wheels are driven. An energy source in the form of an electrical storage battery 7 is provided to supply power for driving the motor 5 and steering mechanism 6 so that the device 1 is self-powered, and the battery 7 can also supply power to a control arrangement 9 which is provided onboard the self-driven device and controls the motor 5 and steering mechanism 6 so that the self-driven device is self-guided, although a separate energy supply, such as a further battery, may be provided for this purpose if preferred. The self-driven device 1 is adapted to take to a milking location where an animal is to be milked, apparatus including a robot arm 11, milking equipment including a set of four teat cups 13 and a milk receiver 15 for collecting the milk extracted from the udder of an animal by the teat cups 13, and a first coupling arrangement 17. The first coupling arrangement 17 includes several coupling components in the form of plug-type elements configured for cooperation with respective socket-type coupling elements included in a second coupling arrangement 19 provided at the milking location where an animal is to be milked by the milking equipment on the self-driven device. The socket elements of the second coupling arrangement 19 are connected to respective supply and discharge lines 20 provided within the structure of the accommodation in which the automatic milking arrangement is installed. Thus, there are included in the second coupling arrangement 19 socket elements respectively connected to:-
i) an electricity supply line 20a;
ii) a compressed air supply line 20b;
iii) a vacuum supply line 20c;
iv) a water supply line 20d;
v) a cleaning liquid supply line 20e;
vi) a supply line for teat treatment liquid 20f; and
vii) a discharge line 20g.

At least some, and preferably all of the plug elements of the first coupling arrangement 17 are configured for push-in connection to the corresponding socket elements. Via the respective complementary pairs of plug and socket elements, the electricity supply line 20a can be connected to electrically operated components of the self-driven device and the milking equipment, and electricity supplied in this way can for example be used to recharge the storage battery 7 and/or to operate the robot arm 11, and operate the milking equipment, such as a vacuum pulsator for actuation of the teat cups. The milking equipment provided on the self-driven device can include means 21 for disconnecting the teat cups 13 from the teats of the animal at the end of milking, such as by pulling on the milk tubes which conduct the milk from the teat cups 13 to the milk receiver 15, or by pulling on other flexible elongate elements connected to the teat cups, and such disconnecting means 21 can be electrically driven and operated by electrical power supplied from the electricity supply line 20a. The electric power supplied by the electricity supply line can also operate a vacuum pump, if the self-driven device is provided with such a pump for producing the milking vacuum. In the illustrated embodiment, however, a vacuum pump on the self-driven device is obviated by a connection to the vacuum line 20c through complementary plug and socket elements of the first and second coupling arrangements 17, 19. The vacuum connection to the teat cups 13 can be via the milk receiver 15 so that this vessel acts as a vacuum balance tank as well as serving to collect the milk removed from the animal udder by the teat cups. It will be understood that usual control devices will be provided to control the vacuum connections to the teat cups to ensure an appropriate milking action.

Included on the self-driven is a teat cleaning device, in particular a teat cleaning cup 23, to which a teat cleaning liquid can be supplied from the supply line for cleaning liquid 20e, via a complementary pair of the plug and socket elements of the first and second coupling arrangements. In addition, compressed air can be delivered to the teat cleaning cup 23 from the compressed air supply line 20b, via another complementary pair of plug and socket elements of the first and second coupling arrangements, for drying a teat after it has been cleaned with cleaning liquid. In this case the teat cleaning cup 23 also serves as a means for drying the teats, although a separate device could be provided for drying the teats with the compressed air if preferred.

At the end of milking, when the teat cups have been removed from the teats, it is common to apply to the teats a teat treatment liquid, such as a disinfectant to ward off mastitis. The illustrated self-driven device of Fig. 1 includes a spray nozzle 25 for use in spraying the teats of a milked animal with a teat treatment liquid, and the teat treatment liquid is delivered under pressure to the spray nozzle 25 from the teat treatment liquid supply line 20f through a complementary pair of plug and socket elements of the first and second arrangements 17, 19. Again it will be understood that the equipment onboard the self-driven device will include flow control valves to control the supply of cleaning liquid and compressed air to the teat cleaning cup 23 and the supply of teat treatment liquid to the spray nozzle 25.

There can in addition be provided on the self-driven device one or more spray heads 27 for rinsing the teat cups 13 just before and/or just after milking an animal using the teat cups. Rinsing water can be supplied under pressure to the rinsing spray heads 27 from the water supply line 20d through another complementary pair of plug and socket elements of the first and second coupling arrangements 17, 19. A control valve provided on the self-driven device 1 can control the supply of rinsing water to the spray heads 27.

The discharge line 20g which is connected to the self-driven device by another pair of complementary plug and socket elements of the first and second coupling arrangements 17, 19 can be used for conducting to drain used teat cleaning liquid collected from the cleaning cup 23, used rinsing water which can be collected by a suitable gutter arrangement on the self-driven device, and also foremilk which could be removed by premilking the teats by means of either the cleaning cup 23 or the teat cups 13 in a manner known per se.

The first and second arrangements 17, 19 are configured with guide means, to guide the first coupling arrangement into correct engagement with the second coupling arrangement as they are moved together, and hence ensure proper alignment between the plug and socket elements as they are engaged. Thus, the second coupling arrangement 19 is shown to have a funnel-like entry 28 for guiding the first coupling arrangement which can be formed with a complementary taper at its free end. In addition, to ensure that the coupling arrangements are maintained in engagement and premature uncoupling prevented, a locking mechanism is provided, such as in the form of latching members 29 on the first coupling arrangement 17, which can be activated by a locking and releasing device or locking and unlocking the coupling arrangement 17. The first coupling arrangement 17 can be moved into engagement with the second coupling arrangement 19, which is stationary at a fixed predetermined position adjacent a milking location, by movement of the self-driven device 1 as a whole. Alternatively or additionally the first coupling arrangement 17 can be mounted to the self-driven device 1 to be capable of being advanced and retracted by an actuator for engaging and disengaging with the second coupling arrangement 19. To ensure a correct positioning of the self-driven device for engagement of the first coupling arrangement 17 with the second coupling arrangement 19, a docking arrangement 31 configured for cooperation with the self-driven device can be provided in association with the second coupling arrangement adjacent a milking location. For example a fixed docking structure 31 may define converging side walls and an end stop wall for cooperation with a flat-fronted nose portion 33 of complementary configuration on the self-driven device. In this way the first and second coupling arrangements 17, 19 can be assured to be properly aligned before or as they are moved towards each other into engagement.

Apparatus included on the self-driven device can include sensors 34 for use in control of the milking operation, such as milk flow sensors for detecting when milk flow has started, and subsequently detecting when the milk flow stops, indicating that milking has finished so that the teat cups can be deactivated and be removed from the teats by actuation of the disconnecting means 21, and sensors for checking the milk, such as one or more of temperature sensors, conductivity sensors and/or milk colour sensors, which can provide a preliminary check on the milk quality and detect milk which is not suitable for delivery to a bulk storage tank where the milk from several animals becomes mixed together, for example because it is affected by mastitis.

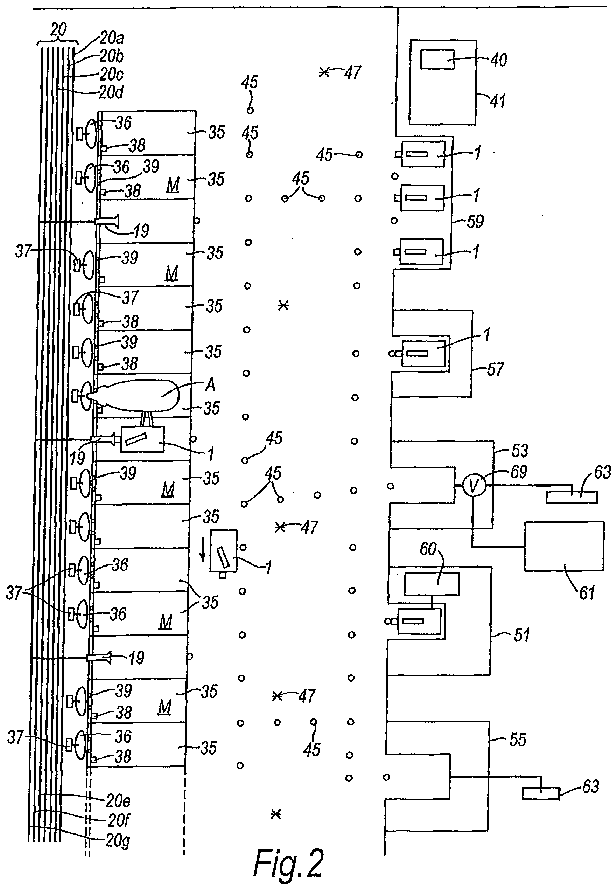

Shown in Figure 2 is a basic layout for an automatic milking arrangement according to the invention installed in loose house animal accommodation in which animals are free to move around and to visit feeding stations 35 on a voluntary basis. For illustration purposes the feeding stations are shown to be in a linear array and essentially parallel to each other, but other configurations are also possible, such as with feeding stations facing inwardly in a stationary annular array. At each feeding station 35 there is a feed trough 36 and a food metering device 37 for delivering into the feed trough a controlled quantity of food, e.g. feed concentrate. In front of each feed trough 36 is a neck lock device 39, as well known per se, the neck lock device being actuable to retain an animal at the feeding station by preventing it from pulling its head back from the feed trough. An animal identification device 38 is provided adjacent each feeding station 35 for recognising an animal approaching the feeding station to eat, such as by detecting a transponder worn by the animal on a neck collar. When an animal A is identified at a feeding station a control computer can decide from stored data whether the animal is due to receive some food and if appropriate actuate the metering means 37 to deliver the calculated quantity of food into the feed trough 36. When the animal's head is in an eating position over the feed trough, the neck lock device 39 can be actuated so that the animal is retained in this position. The computer 40 used to identify the animals and to control the food supply can be located in a control centre 41 remote from the feeding stations 35.

Some of the feeding stations are designated milking locations M, meaning that an animal can be milked while standing in a feeding position at one of these locations. Mounted adjacent each milking location M is a second coupling arrangement 19 as described above in connection with Fig. 1. At least some of the feedings stations 35 that are designated milking locations M are arranged in adjacent pairs and share a second coupling arrangement 19 which is disposed between the milking locations so that an animal standing in either of these two locations can be milked by apparatus delivered by a self-driven device and having its first coupling arrangement 17 engaged with the shared second coupling arrangement 19.

Several self-driven devices 1 are provided in the installation. Each of the self-driven devices may be of the form described above with reference to Fig. 1, but other possibilities also exist as will become clear from the description which follows. The self-driven devices are free to move around within the animal accommodation and are completely untethered. Each of the self-driven devices has a control arrangement 9 with a self guidance system, so that when instructed to go to a particular destination the self-driven device is able to manoeuvre itself through the animal accommodation to the destination stipulated. The self-driven devices 1 are controlled remotely only insofar as they receive from the control centre 41 instructions to go to specified destinations. To enable the self-driven devices 1 to guide themselves around within the animal accommodations, stationary elements 45 may be located throughout the accommodation and trace predetermined paths of movement which the self-driven devices can follow when moving between destinations. Additionally or alternatively a number of stationary antennas 47 may be distributed throughout the animal accommodation and transmit signals to facilitate the guidance of the self-driven devices between specified destinations. Other guidance arrangements for the self-driven devices are of course possible and will occur to those skilled in the art.

The addition to the milking destinations adjacent the milking locations M, where the self-driven devices can be coupled to the second coupling arrangements 19, other destinations in the animal accommodation to which self-driven devices can be dispatched include an analysis station 51, a milk discharge station 53, a milk dumping station 55, a servicing and/or cleaning station 57, and a standby station 51. At the analysis station 51 the milk receiver 15 of a self-driven device 1 can be connected automatically to a milk analyser 60 for a sample of milk to be taken from the receiver and analysed as to its composition, and more especially for determination of the levels of particular milk constituents of interest, such as one or more of the fat content, protein content, leucocyte content, urea content, enzyme, e.g. NaGase (N-acetyl-D-glucosaminidase) content, and somatic cell count. The milk analyser 60 can determine whether the milk in the milk receiver 15 is of suitable quality for delivery to a bulk milk collection tank 61. Depending on the analysis results the self-driven device can be directed to either the milk discharge station 53 at which the milk contained in the receiver 15 can be emptied automatically from the receiver and transferred to the bulk collection tank 61, or to the milk dumping station 55 at which the milk contained in the milk receiver 15 can be automatically emptied from the receiver and directed to a waste tank 63 or to drain. If a separate milk dumping station is not provided, the discharge station can include a valve 69 to direct the milk emptied automatically from the receiver to either the bulk milk tank or to a waste tank or drain.

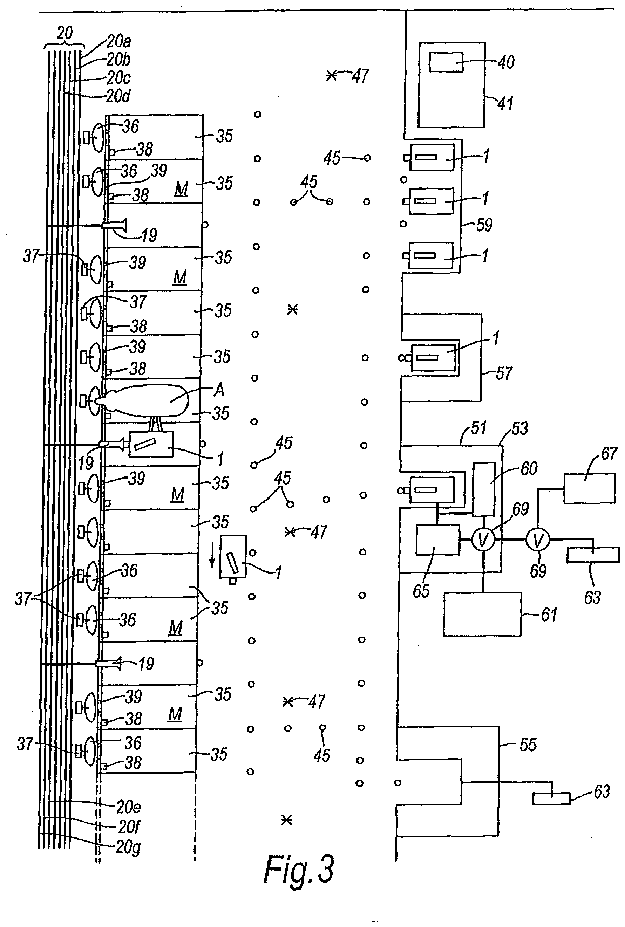

After the milk receiver 15 has been emptied, the self-driven device can be instructed to move from the discharge station 53 or dumping station 55 to the servicing/cleaning station 57 where any necessary routine servicing or cleaning operations are carried out automatically, such as for rinsing the milk receiver 15 or performing a more thorough cleaning of the milk handling equipment included on the self-driven device 1. When ready to carry out another milking operation the self-driven device may be directed to the standby station 59 to await an instruction to go to a milking destination where there is an animal eligible to be milked in one of the milking locations M. It is not essential for the analysis and milk discharge stations 51, 53 to be separate and distinct. In the modified arrangement of Figure 3, the analysis station 51 and the discharge station 53 are combined. While it is still possible for the self-driven device 1 to remain at the analysis station until the analysis is completed and the milk can be automatically emptied from the milk receiver and transferred to the bulk milk collection tank 61, if acceptable in quality, another possibility is to provide a temporary holding tank 65 into which the milk will be transferred from the milk receiver 15 and held until the analysis is completed. This has the advantage that the self-driven device is not required to remain at the analysis station during the time that it takes for the analysis to be completed, and it can instead move off and perform other tasks. Depending on the analysis results the milk can be transferred from the temporary holding tank 65 to the bulk milk collection tank 61, to a separate waste tank 63 or to a tank 67 for colostrum milk, an automatic valve arrangement 69 being provided to direct the milk accordingly based on the analysis results.

Even when the analysis/discharge station allows milk to be directed to a waste tank or drain rather than the bulk milk tank, it can be advantageous to have a separate milk dumping station 55. For example, when an initial check made on the milk in the course of milking by the sensors 34 onboard the self-driven device indicates that the milk is not good enough to be delivered into the bulk milk tank 61, the self-driven device can be directed to take the milk receiver with the collected milk straight to the dumping station 55. In this way valuable analysis station time is not taken up with analysing milk already known to be unacceptable. Furthermore, in some cases, such as animals being treated with antibiotics, it is known in advance that the milk should not delivered into the bulk milk tank. This information, along with other animal related data, will be stored in a database at the computer control centre 41, and when such an animal is milked the self-driven device 1 can be directed to go straight to the dumping station 55 when milking is finished. As an alternative, when it is known in advance that the milk from an animal will not be suitable for transfer to the bulk collection tank, at the milking location M, the milk extracted from the udder by the milking equipment could be sent directly to the discharge line 20g to which the milking equipment is coupled by the first and second coupling arrangements 17, 19.

Another possible arrangement is for the milk receiver 15 to be detachable from the self-driven device 1, so that it can be left at the analysis/discharge station and remain there until the analysis has been completed and the milk receiver has been emptied, after which the milk receiver 15 can be picked up again either by the same self-driven device or by another self-driven device of the same or a similar form, or perhaps another self-driven device having the sole duty of collecting empty milk receivers from the analysis/discharge station and taking them to a standby/area, possibly via the servicing or cleaning station 57. This latter arrangement allows the self-driven device to move quickly away from the analysis station, so that it can be used for other tasks such as to collect another milk receiver and milk another animal.

When an animal arrives at a feeding station 35 that is designated a milking location M it is identified by the animal identification system 38 and the computer system checks the information stored in database to determine whether the identified animal is eligible to be milked, for example based on the time interval since the last previous milking of that animal, or the expected milk yield which can be calculated from the time interval since the last previous milking and the rate of milk development in the udder, which itself can be determined from recorded data relating to previous milkings. If the animal is eligible to be milked, a self-driven device 1 is dispatched from the standby station 59 to the milking destination adjacent the relevant milking location M where the animal will be standing and will have been given some food to eat, which is delivered into the corresponding feeding trough 36. The animal is retained in this position by the neck lock device 39, which enables milking. When the self-driven device arrives its first coupling arrangement 17 is engaged with the second coupling arrangement 19 so that the connections are made to the various supply and discharge lines 20 as described above. The robot arm 11, driven by electricity supplied by the supply line 20a, collects the teat cleaning cup 23 and applies it to each teat of the animal in turn, a sensor 12 such as an ultrasound sensor, a laser sensor or a camera being carried by the robot arm for detecting the teats and guiding the arm accordingly. Teat cleaning liquid is supplied to the teat cleaning cup 23 from the supply line 20e during the cleaning operation, after which compressed air can be supplied to the teat cleaning cup from the compressed air line 20b for drying the teats. Premilking of each teat is preferably performed, which can also be carried out using teat cleaning cup 23, although it is also possible to use the teat cups 13 for premilking. The foremilk extracted during premilking can be discharged to drain via the discharge line 20g, as can the used teat cleaning liquid. The robot arm 11 applies the teat cups 13 in turn to the four teats of the animal being milked, and vacuum supplied from the vacuum line 20c via the milk receiver 15 is connected to the teat cups so that milking proceeds in a normal manner with the milk extracted from the udder being collected in the milk receiver 15 on the self-driven device. If desired the milk receiver 15 may comprise four chambers for collecting the milk from the respective udder quarters. At the end of milking the milk flow diminishes and this is detected by the milk flow sensors 34. In response the control system shuts off the vacuum connection to the teat cups 13 and activates the teat cup disconnecting means 21 which pulls the teat cups back to an inoperative position on the self-driven device 1. The rinsing spray heads 27 can be moved over the teat cups and the teat cups rinsed with water supplied through the supply line 20d. The robot arm 11 can manipulate the spray nozzle 25 so that it is directed towards each of the teats in turn and each teat can be sprayed with a teat treatment liquid supplied through the supply line 20f. The milking operation is now complete and the latching members 29 can be actuated to allow disengagement of the first coupling arrangement 17 by moving away from the second coupling arrangement 19. The self-driven device 1 can be instructed to take the milk receiver 15 and the collected milk to the analysis station 51 (or to the dumping station 55, if appropriate) where it can be automatically analysed and discharged. The entire milking process can be performed without, or substantially without, drawing any energy from the storage battery 7 of the self-driven device so that this energy supply is not depleted by the actual milking and remains available for driving the motor or motors responsible for moving the self-drive around within the animal accommodation, and for powering the onboard guiding control arrangement which functions during such movements of the self-driven device to ensure that it travels to the correct specified destination.

The milk receivers 15 of the self-driven devices 1 can be dimensioned to have a capacity to receive the milk yielded by one animal during a single milking. Various other embodiments are also possible though. All of the milk receivers could have the same capacity, but alternatively there can be two or a range of different capacities for the milk receivers, and the control system can then have processing means organised to select a self-driven device, and hence a receiver 15 of given capacity, to be taken to a milking designation based on the expected milk yield of the animal to be milked. In another embodiment at least one self-driven device 1, or at least some of the self-driven devices, are equipped with a milk receiver 15 with a sufficient capacity to hold the milk yielded by two or perhaps more animals. Such an embodiment would allow animals located in two adjacent milking locations which share a second coupling arrangement 19 to be milked by the milking equipment belonging to the self-driven device without the self-driven device needing to move away from that milking position or even to disengage its first coupling arrangement 17 from the second coupling arrangement 19 between the milking of the two animals. It is also possible for the milking equipment on the self-driven device 1 to have two sets of teat cups 13 so that two such animals in adjacent milking locations M can be milked at the same time. The milk from the two animals could be delivered into a common large capacity milk receiver or into respective milk receivers provided on the self-driven device and connected to the respective sets of teat cups.

When a milk receiver has sufficient capacity to accommodate milk yielded by two or more animals, the control system for the self-driven device may advantageously include a route planning system so that after milking an animal at a first milking location M the self-driven device moves to another milking destination for the milking equipment to milk another animal at a second milking location M before taking the milk receiver or receivers to the analysis station 51 and/or discharge station 53 where the receiver or receivers are automatically emptied. If there is more than one available second animal in a milking location and eligible to be milked, the route planning system can select which of these animals should be milked by the milking equipment when it is taken from the first milking location, based on a number of factors. The route planning system can also decide the order in which two animals eligible for milking are to be milked by milking equipment transported by the self-driven device. For instance, the route planning system can take into account the distances that the self-driven device 1 will need to travel before reaching the analysis/discharge station, and/or the expected milk yields of the animals eligible to be milked, e.g. to ensure that there will be sufficient capacity in the milk receiver after milking one animal to receive the milk of the second animal to be milked.

The milking equipment provided on the self-driven device 1 can comprise a metering means for measuring the quantity of milk yielded by an animal milked using the equipment. This is especially desirable if the milk receiver is to be filled with milk from more than one animal before being emptied. Otherwise a milk metering means can be conveniently located at the station where the milk is automatically emptied from the receiver.

The automatic milking arrangement may include a self-driven device 1 that is dedicated for milking animals anticipated to yield milk of unacceptable quality for delivery to the bulk milk tank. The milking equipment of such a device may require less frequent cleaning than the equipment of other self-driven devices, and having a dedicated self-driven device of this kind can help avoid cross-contamination between animals.

The self-driven devices 1 of an automatic milking arrangement according to the invention can constitute or be provided with different milking equipment modules. In other words the milking equipment taken to a milking location by one self-driven device for milking an animal can be different to the milking equipment taken to a milking location by another self-driven device. The different milking equipment modules may differ from each other in a variety of different respects. As already referred to above, milking equipment modules could differ in the capacities of their milk receivers 15. In an especially advantageous automatic milking arrangement, the milking equipment modules differ in respect of a feature or characteristic parameter of at least one element. More particularly, the milking equipment modules can have elements with different characteristic parameters that may suit better different individual animals. According to one exemplary embodiment the milking equipment modules have teat cups with different teat cup liner configurations. Not all animal teats are the same size or shape. According to the invention milking equipment modules can have teat cups with teat cup liners that are different in regard to their resiliency, the length of the teat chamber and/or the diameter of the teat opening. The control system of the milking arrangement can include a database containing teat data for each animal, and there can be provided processing means to select the milking equipment module best suited for milking a particular animal which is eligible for milking and has been identified at a milking location, and to dispatch the self-driven device to take the selected milking equipment to the milking location to milk the animal concerned. If the best choice of milking equipment module is not available, the next best available milking module may be selected so that the milking process is not delayed. Thus, for each animal there can be an order of preference for the different milking equipment modules to be employed in milking that animal, and this information can be stored in a database. In the self-driven device 1 described above with reference to Fig. 1, the milking equipment module is integrated with the self-driven device so that each self-driven device has its own milking equipment module. Whilst it is preferable to have a range of different milking equipment modules, it is of course not necessary for all the modules to be different, and some can be the same. It may for instance be appropriate to have just one or two modules with very large or very small teat cup liners. Furthermore it is possible to have milking equipment modules which are separable from the self-driven devices, such as in the form of a milking unit that is transportable by a self-driven device, but separable from it.

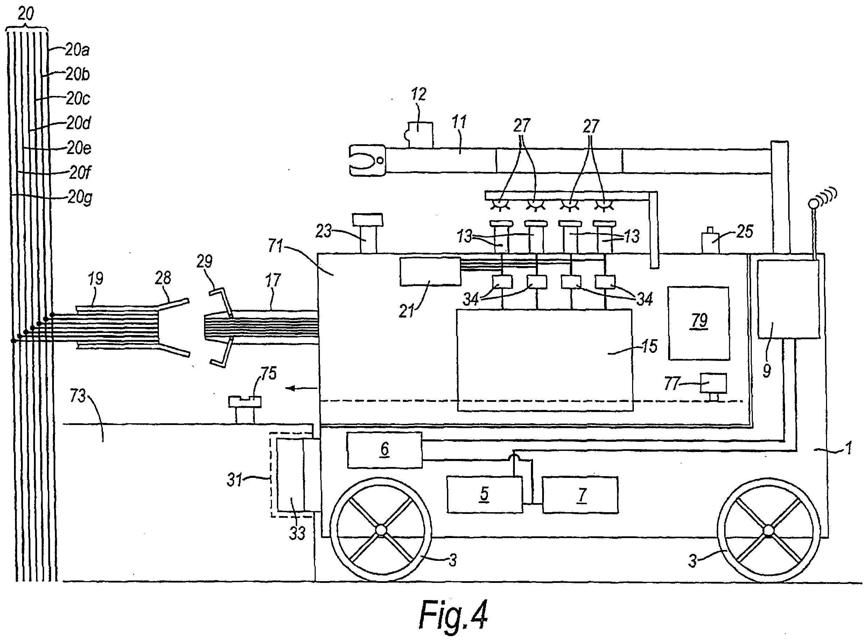

Illustrated in Figure 4 is a form of self-driven device 1 having a demountable milking unit 71. The milking unit is adapted to be conveyed to a milking location M by the self-driven device, and to be unloaded from the self-driven device at the milking location. Different arrangements are possible for unloading the milking unit 71 from the self-driven device 1, and in accordance with one possibility the milking unit 71 can be lifted from the self-driven device onto a supporting structure 73 provided at the milking location, and this lifting operation can conveniently be performed by the robot arm 11. Another possible unloading arrangement is for the milking unit 71 to be provided with rolling elements to allow the milking unit to roll off of the conveying platform of the self-driven device, or skid elements to allow the milking unit to slide off of the conveying platform, and in either case the robot arm 11 can produce the required displacement of the milking unit, or the milking unit could be constructed to drive itself off the self-driven device. To facilitate the unloading of the milking unit 71, the self-driven device can be equipped with a ramp member which is deployable to bridge between the conveying platform and the supporting structure 73 onto which the milking unit is to be unloaded, which can be especially beneficial if the conveying platform is not at the same height as the support structure.

The support structure 73 onto which the milking unit is unloaded can include a positioning means 75 that is engageable by the milking unit 71 to ensure that the milking unit takes up a predetermined position adjacent a milking location M. The positioning means can be an upstanding post or the like which engages into a slot or recess in the underside of the milking unit, and the milking unit can include a releasable mechanism 77, such as retractable pin or the like, which can engage with the post to secure the milking unit to the support structure so that the milking unit remains in a fixed position while the milking of an animal is carried out. The milking unit 71 and the self-driven device 1 which transports it together comprise all the apparatus described above as being integrated with the self-driven device illustrated in Fig. 1. In addition to the drive motor 5, steering mechanism 6, electric storage battery 7 and control arrangement 9 of the guidance system, the robot arm 11 is mounted on the self-driven device, as is a teat cleaning device 23, which could in this embodiment comprise brushes driven by a motor powered by the battery 7. The milking unit, on the other hand, includes the teat cups 13, the milk receiver 15, the sensors 34 for milk flow and milk properties, the first coupling arrangement 17 for engagement with the stationary second coupling arrangement 19 provided at the milking location, the spray nozzle for delivery of teat treatment liquid 25, and the spray heads 27. Also incorporated in the milking unit 71 is a control device 79 to control the milking equipment components in the course of milking an animal.

In use of the self-driven device and milking unit 71 of Fig. 4, when an animal eligible for milking has been identified at a milking location M, been fed some concentrate, and been retained by the neck lock device 39, the self-driven device, possibly after selection of an appropriate milking equipment module, i.e. milking unit based on teat cup liner shape and/or size or milk receiver capacity, is instructed by the central computer control 41 to take the milking unit to the milking location where the animal to be milked is standing.

Self-driven devices with separable milking units 71 as depicted in Figure 4 can be used in various automatic milking arrangements such as those shown in Figs. 2 and 3. When the self-driven device 1 with the milking unit 71 conveyed thereon arrives at the specified milking location, the self-driven device stops at a predetermined position for example relying on the aid of a docking arrangement as described above in connection with Fig. 1, and the milking unit is unloaded from the conveying platform of the self-driven device and set down onto the support structure 73, the positioning post or other means ensuring a predetermined position of the milking unit 71 relative to the adjacent feeding stall where the animal to be milked is standing. In the course of the final displacement of the milking unit into the predetermined position, the first coupling arrangement 17 on the milking unit can be bought into operative engagement with the stationary second coupling arrangement 19 so that the milking equipment of the milking unit becomes connected to the supply and discharge lines 20. Alternatively the milking unit can be moved into and locked in position on the support structure first, utilising the positioning post and locking pin described, and the first coupling arrangement 17, which can be advanced and retracted relative to the milking unit, can then be extended to engage with the stationary second coupling arrangement 19. In either case the first and second coupling arrangements 17, 19 when engaged are locked together to prevent unintentional disengagement by the latching members 29, or any other suitable form of locking mechanism provided on the milking unit and actuable thereby. Although the milking unit will be completely detached from the self-driven device at this time leaving the self-driven device free to move away and guide itself to a new destination as instructed by the central control system, before doing so it performs some initial tasks before the actual milking by the milking unit commences. Thus, the robot arm 11 having possibly been used in unloading the milking unit can, along with the teat sensor 12 carried on the robot arm, assist in cleaning the teats by applying the rotating brushes of the teat cleaning device provided on the self-driven device to the teats of the animal to be milked. In an alternative embodiment a teat cleaning cup 23, as provided in the milking equipment on the self-driven device of Fig. 1, can be included on the milking unit 71 and be collected by the robot arm 11 and applied to each of the teats to clean, dry and possibly premilk the teats in the same manner as described above in relation to Figure 1. The robot arm 11 and the teat sensor 12 will then operate automatically to apply each of the cups 12 provided on the milking unit 71 to the respective teats of the animal. Having performed the teat cup connection, the robot arm can be withdrawn to a parked position on the self-driven device, and the milking of the animal is taken over by the milking unit 71. With its duties and functions at the milking location having been completed the self-driven device can travel away from the milking location, taking with it the robot arm and any other apparatus carried permanently on it, and the self-driven device can then be employed to perform other tasks, such as to pick up another milking unit 71 and deliver it to a different milking location where another animal eligible for milking has been identified. When the animal milking comes to an end, the flow sensor 34 on the milking unit can detect the reduced milk flow and in response the vacuum connection to the teat cups 13 will be interrupted and the teat cup disconnecting means 21 will be activated to remove the teat cups from the teat of the animal and draw them back onto the milking unit where they will be rinsed with water by the spray heads 27. The spray nozzle 25 can be arranged on the milking unit to direct a spray of teat treatment liquid onto the teats of the animal. When these steps have been completed the milking process is finished. It will be appreciated that in the course of the milking unit milking the animal, and as a result of the plug and socket connections effected by the engaged first and second coupling arrangements, the electric power consumed by the milking equipment to effect and control the milking is supplied from the electricity supply line 20a, the milking vacuum is supplied from the vacuum supply line 20c, rinsing water for the spray heads 27 is supplied from the water supply line 20d, and teat treatment liquid delivered to the spray nozzle 25 is supplied from the teat treatment liquid supply line 20f. In addition, if the milking unit includes a teat cleaning and drying device, cleaning liquid and compressed air can be supplied from the cleaning liquid and compressed air supply lines 20e and 20b. The discharge line 20g can be used to conduct to drain or a waste tank used cleaning liquid, rinsing water, foremilk, or maybe milk obtained from the udder of an animal known in advance of milking to be unsuitable for transfer to the bulk milk collection tank 61. After the milking has ended, milking unit 71 can be released from the positioning post 75, and the latching members 29 can be unlocked to allow disengagement of the first coupling arrangement 17, either by retracting the first coupling arrangement if this is provided for, or by subsequent displacement of the milk unit 71 as a whole. With the milking unit now ready for collection, the self-driven device 1, or another similar self-driven device, is instructed to guide itself to the milking location M where the milking unit including the milk receiver 15 and the milk collected therein is loaded onto the conveying platform of the self-driven device, for example by being lifted onto the self-driven device by the robot arm 11. Other techniques for loading the milking unit onto the self-driven device are also possible. One possible alternative method would be to provide the milking unit 71 with its own drive mechanism to enable the milking unit to move itself onto the conveying platform of the self-driven device, and another possibility is to equip the self-driven device with a flexible pulling element, such a cable or chain which can be attached automatically to the milking unit and wound up onto a drum by a drive motor to pull the milking unit onto the conveying platform of the self-driven device. Thus, it is not an essential requirement for a self-driven device that goes to the milking location to collect the milking unit to have a robot arm, or any other equipment such as a teat cleaning device which is not actually needed to pick up the milking unit. Indeed self-driven devices specifically adapted for collecting milking units from the milking locations, and not necessarily equipped with such apparatus, may be provided in the automatic milking arrangement for the purpose of transporting milking units after they have been used to milk animals. Such self-driven devices designed as milking unit colleting devices can be less costly to manufacture than the self-driven devices equipped with the robot arms etc, so the cost of the automatic milking arrangement as a whole can be reduced.

The self-driven devices 1 adapted for use with separable and demountable milking units 71 can have the same form of guidance systems as described above in connection with the self-driven device of Fig. 1 for moving around in the animal accommodation, and the animal accommodation may have the same features, such as analysis, discharge, cleaning and dumping stations as described above and illustrated in Figures 2 and 3. When a milking unit 71 is retrieved from the milking location M it will be taken to the analysis station 51, where the milking unit may once again be unloaded and remain until the milk in the milk receiver 15 has been sampled and analysed, or if preferred the milking unit can remain on the self-driven device at the analysis station until the milk has been automatically sampled and analysed, or if there is a holding tank 65 at the analysis station as in Fig. 3, the milk can be transferred to the holding tank from the milking unit whilst it is disposed on the self-driven device that transported it from the milking location. As will be appreciated, if appropriate, the milking unit can be taken directly to the dumping station 55 for the milk to be emptied automatically from the milk receiver. The milking unit 71 having had its milk receiver 15 emptied of milk, either at the discharge or dumping station, can be conveyed to a standby area, possibly after having been taken to the servicing/cleaning station 57 for any required routine servicing and/or rinsing. At the standby area the milking unit will be unloaded from the self-driven device to wait with other milking units standing by to be picked up and taken to a milking location by a self-driven device for milking another animal at that location. The milking units can include electric storage batteries for performing some tasks when not connected to the electricity supply line 20a at a milking location, although this supply line will deliver at least most of the electric energy consumed by the milking unit in the course of milking an animal, and the electric energy supplied from the supply line 20a can also recharge the milking unit batteries. Because the self-driven devices with demountable milking units 71 may not be coupled to the electricity supply line at the milking location M, and will in any case not remain at the milking locations for relatively lengthy periods, a separate battery recharging station for the self-driven devices may be provided in the animal accommodation, and it can for example be combined with the standby area 59 for the self-driven devices, and the batteries of the self-driven devices will be recharged automatically at this station. It is possible for the self-driven devices, or at least some of the self-driven devices, to be capable of transporting two, or perhaps even more milking units at the same time.

The milking units 71 used within an automatic milking arrangement are not necessarily all the same and they can differ in the same way as the milking equipment integrated with self-driven devices can vary as described above. Thus, milking units having milk receivers with different capacities, two or more sets of teat cups 13, and teat cups with different liner configurations are possible for example. Furthermore, a control system with processing means for selecting the milking unit to be taken to a milking location, and maybe also selecting the self-driven device to take it there, and/or with a route planning system to decide the destinations to which the milking unit should be taken and the visiting order of those destinations, can be used with self-driven devices which transport demountable milking units 71 in the same way as described above in connection with self-driven devices having integrated milking equipment.

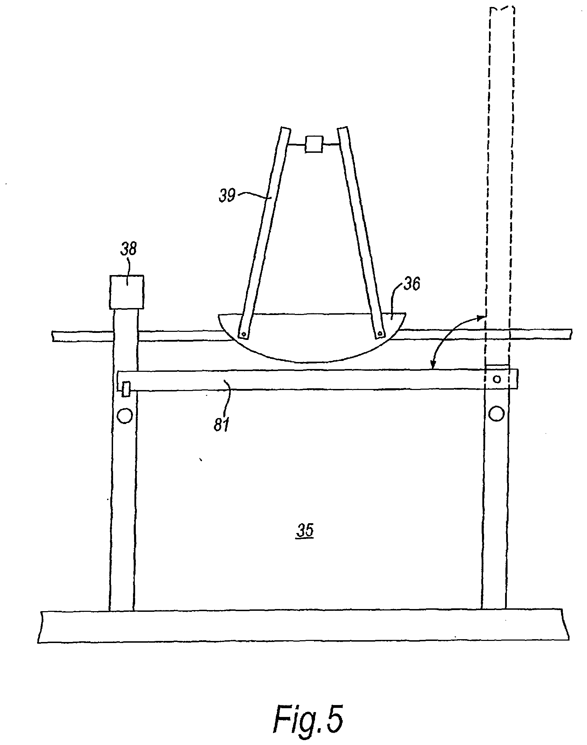

Shown in Fig. 5 is a feeding station 35 of a loose house animal accommodation in which an automatic milking arrangement according to the invention is installed. The feeding station includes side rails to constrain an animal to enter the feeding stall from the entrance and exit end opposite to that at which the feed trough 36 and neck lock 39 are located. A barrier 81, such as a pivotable bar, is mounted at the entrance end and is pivotable about a horizontal axis between a substantially vertical position (shown in broken line in Fig. 5) in which entry of an animal into the feeding station is unimpeded, and a substantially horizontal position (shown in full line in Fig. 5) in which entry of an animal is prevented, or at least substantially obstructed. An animal identification sensor 38 is positioned adjacent the entrance to the feeding station 35 to detect and recognise an animal approaching the station. Of course other forms of barrier moveable between positions permitting and discouraging or preventing entry of an animal are also possible and will occur to skilled readers, such as vertically movable posts which can be raised out of and retracted into the floor. In addition there are other kinds of device that may discourage an animal from entering, such as sound producing devices, which could be used as well. When an animal approaches a feeding station that is designated a milking location it will be detected and recognised. If it is determined that the animal is eligible to be milked or will become eligible for milking in a short time, the bar 81 will be raised to admit the animal so that it can be fed with concentrate and milked as described above. If the animal is not due for milking the bar 81 will remain down in its horizontal position so that the animal will be barred from entry and hence encouraged to move on to a different feeding station. When an animal approaches a feeding station 35 that is not designated a milking location, it will also be detected and recognised, and it is determined whether the animal is eligible for milking. If the animal is not due to be milked, but is entitled to receive some food the barrier is raised to admit the animal to the feeding station and an appropriate amount of concentrate will be metered into the food trough 36. However, if the animal is eligible to be milked, or will soon become eligible, the barrier will remain down to bar entry of the animal to the feeding station so as to encourage the animal to move to a feeding station that is designated a milking location where the animal will be permitted entry to receive food and where the animal can be milked. By equipping the feeding stations 35 with the means to bar or discharge entry, there can be avoided situations in which the feeding stations that are designated milking locations might otherwise become fully occupied by animals which are not due to be milked, or animals that are eligible to be milked visit feeding stations which are not milking locations and at which milking is not possible. To avoid animals becoming distressed, the control system can of course be programmed to admit an animal not eligible to be milked into a feeding station 35 which is designated a milking location M if all the feeding stations not designated milking locations are already occupied, and similarly to admit entry of an animal eligible to be milked into a feeding station that is not a milking location when all the feeding stations that are designated milking locations are occupied by other animals.

It will be appreciated that a barrier arrangement 81 selectively permitting or preventing entry of animals into the feeding stations can be used in combination with a mechanism, such as the neck lock devices 39 referred to, to retain an animal at a milking location. However, if the barrier arrangement is configured and adjusted to prevent an animal leaving a feeding station that it has entered until milking of the animal has been completed, the barrier 81 can be relied upon to fulfil both functions.

Whatever the form of the retaining means provided to retain an animal at a milking location M during milking of the animal and to release the animal automatically so that it can leave the feeding station 35 after milking has finished, the retaining means is controlled so that an animal will not be released until a check has been made on the quality of the milk yielded by the animal. A device such as the milk analyser at the analyser station 51 or a milk colour sensor 34 capable of detecting blood in the milk can make a determination that the animal requires attention or should at least be inspected. The animal can be retained at the feeding station 35 where it has been milked until such a determination has been made, in spite of the fact that self-driven device 1, whether provided with integrated milking equipment or with the milking unit 71, can be moved away from the milking location so that the milking equipment is not rendered unusable while the animal remains retained at the milking location. If it is determined that all is well and the animal teats are healthy, the retaining means 39, 81 can be actuated automatically to allow the animal to leave the milking location. If on the other hand it is determined that the animal should be treated, e.g. because mastitis has been detected, or the animal should at least be inspected to ensure all is well, the retaining means 39, 81 will continue to retain the animal and will not be actuated automatically to release the animal. When a milked animal is retained and not automatically released, a supervisor may be alerted by generation of an attention signal, which can identify the animal as well as the feeding station where it is retained. A warming lamp may for example be illuminated at the relevant feeding station, or the supervisor may be notified by a message produced on a computer screen or transmitted as a telephone or SMS message. Furthermore, an operator initiated action may be necessary to release the retained animal, such as a command input into a control device by a manual action, for example pressing a button or by a touch, or perhaps as a voice activated command so that the supervisor will determine when the animal should be released. There can be provided in addition a camera, e.g. mounted on the self-driven device 1, or on the milking unit 71, to view the teats of an animal at the time of milking in order to detect traumas, such as a physical injury or inflammation, which can be done by comparison with historical data stored in database. The retaining means 39, 81 can then be controlled so as to retain the animal at the milking location, and not to automatically release the animal, if an injury or inflammation of a teat is detected.

Retaining animals in a milking location when they require attention or deserve inspection is an effective and efficient way to locate such animals. So as not to detract from the overall efficiency and capacity of the automatic milking arrangement, however, it is advisable that animals should not be retained in milking locations longer than necessary. In a preferred embodiment of the invention, an initial check is made on the milk yielded by an animal in the course of the actual milking process, such as by a sensor 34 provided on the self-driven device 1 or milking unit 71 for sensing milk flow, milk conductivity or milk colour, and if it is determined from this check that all is well with the animal, the animal is released automatically as soon as the milking operation is completely. If it is determined from the initial check that the animal is definitely in need of attention or inspection the animal will be retained and will not be automatically released. In addition the milk yielded by the animal may be taken directly to the dumping station to be discarded. Another possibility if the initial check is perhaps borderline or inconclusive, is for the animal to be retained whilst the milk yielded by the animal is taken to the analysis station and analysed. If the more thorough analysis shows that the animal should be attended to or inspected the animal will not automatically be released and will continue to be retained until released by a supervisor initiated action, whereas if the analysis results indicate that the animal does not require treatment or inspection, the animal will be released automatically from the milking location when the analysis is complete. With such an arrangement each animal is only retained at the milking location for the necessary amount of time and needless retention of animals is avoided.

It will be understood that the automatic milking arrangement of the invention operates fully automatically and is intended to do so for many hours without requiring direct human supervision or control. The number of self-driven devices will depend on the size of the animal accommodation and more especially the number of animals to be milked in the animal accommodation. In general though there will be several self-driven devices. The same applies for the milking units 71 when self-driven devices and demountable milking units are used.

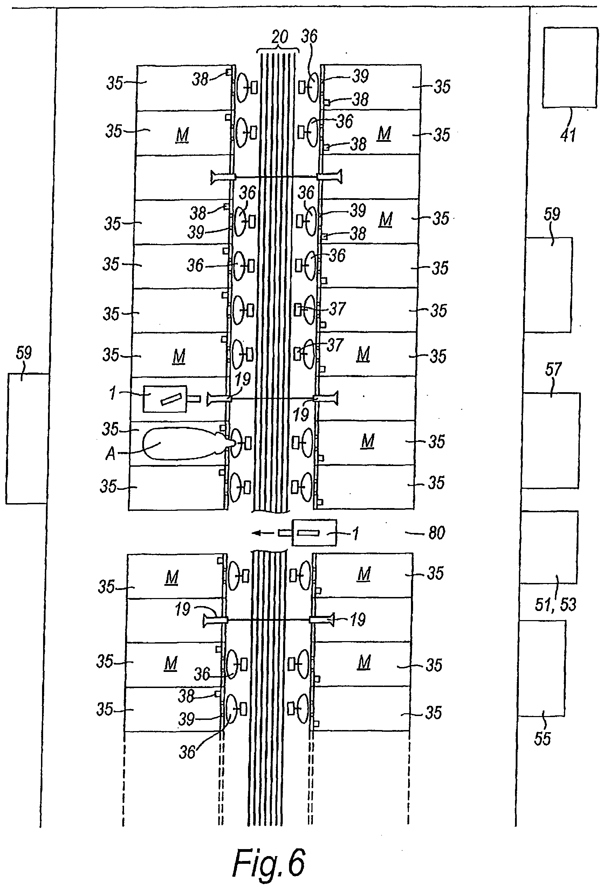

Figure 6 illustrates an embodiment in which the automatic milking arrangement is provided in a loose house accommodation. This embodiment is fundamentally similar to that of Figure 2, but two symmetrically opposed linear arrays of feeding stations 35 are provided, the self-driven devices 1 being movable along each array behind animals standing in the feeding stations in order to approach an animal occupying a milking location in order to deliver milking equipment to milk the animal. A passageway 80 is shown to be provided to allow the self-driven devices to pass through the linear arrays from one side to the other.

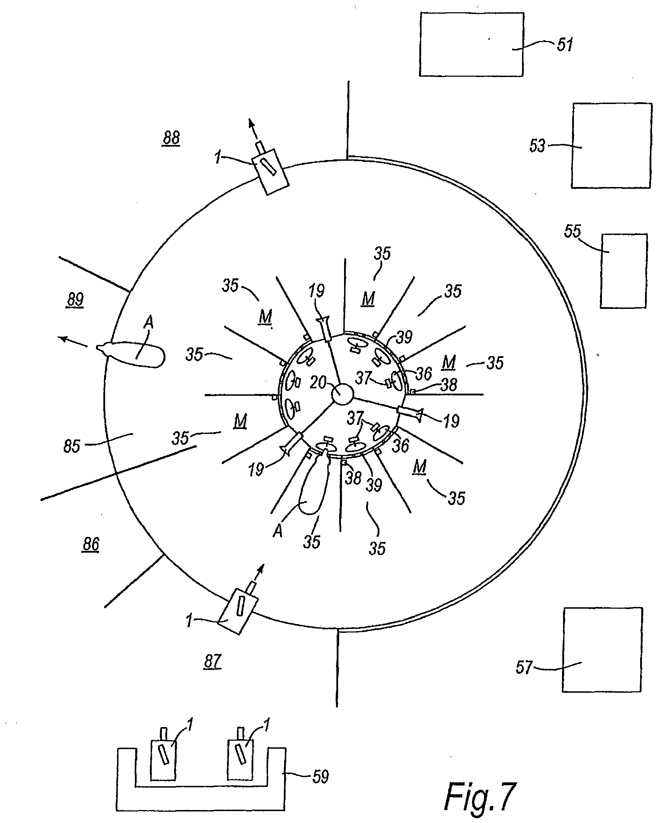

Figure 7 also illustrates an automatic milking arrangement according to the invention also installed in a loose house accommodation, but in this case the feeding stations 35 are disposed in an annular array on a rotating platform 85. Distributed around the platform are a number of zones. At a first zone 86 animals can board the rotating platform 85 to approach and enter a vacant feeding station 35. At a second zone 87 self-driven devices 1, either as shown in Fig. 1 with integrated milking equipment, or as shown in Fig. 4 with separable milking units 71, can move onto the rotating platform 85 in order to deliver milking equipment to a feeding station that is designated a milking location M and which is occupied by an animal eligible to be milked. At a third zone 88, self-driven devices 1 transporting milking receivers 15 and the milk contained in those receivers and having been yielded by the milked animals, can leave the rotating platform 85 for taking the milk to the analysis station 51 which is remote from the rotating platform. A fourth zone 89 is where animals that have been fed and possibly milked can leave the rotating platform provided they have been released by the retaining means 39, 89 and are not being retained because they require attention or inspection. In addition to the analysis station 51, discharge, servicing/cleaning, dumping and standby stations 53, 55, 57, 59 are located around the rotating platform 85. The operation of this automatic milking equipment will be understood from the foregoing description of other embodiments. For ease of illustration the rotating platform is shown to have only nine feeding stations, six of which are designated milking locations, but it will be understood that a much larger number of feeding stations can be provided on the platform.

Throughout the drawings the same reference numerals have been used to denote the same or equivalent parts and components, and unless otherwise stated features described with respect to one embodiment of the invention can also be used in other embodiments. The scope of the invention is defined by the appended claims.

## Claims

1. An automatic milking arrangement comprising
milking locations (M) accessible to individual animals,
a self-driven device (1) with a remote controlled guidance system for taking to a milking location (M) an apparatus for use in automatically milking an animal located at the milking location (M),
retaining means (39, 81) for automatically retaining an animal in the milking location (M) during the milking of the animal and automatically releasing the animal to allow the animal to leave the milking location (M) after the milking of the animal has finished,
and the self-driven device (1) and milking apparatus being movable away from the milking location (M) when the animal is retained by the retaining means (39, 81), **characterized in** a device for determining from the milk yielded by the animal milked at the milking location (M) if the milked animal requires attention or should be inspected, the retaining means (39, 81) being controlled so that the milked animal is retained at the milking location (M) and is not automatically released when it is determined the animal requires attention or should be inspected, wherein the device for determining if the milked animal requires attention or should be inspected comprises milk analysing means (34, 60) for analysing the composition of the milk, and wherein the retaining means (39, 81) are controlled so that a milked animal can not be automatically released from the milking location (M) until the analysis of the milk yielded by the animal has been completed.

2. An automatic milking arrangement according to claim 1, wherein the retaining means (39, 81) is controlled so that, when a milked animal is retained and is not automatically released, the milked animal is retained at the milking location (M) by the retaining means (39, 81) until released by an operator initiated action.

3. An automatic milking arrangement according to claim 2, wherein the operator initiated action is a command entered into a control device by a manual operator action or as a voice activated command.

4. An automatic milking arrangement according to any one of the preceding claims, wherein a signal generating device is arranged to generate an attention signal for drawing the attention of supervisor to a milked animal being retained and not automatically released.

5. An automatic milking arrangement according to any one of the preceding claims, wherein the device for determining if the milked animal requires attention or should be inspected comprises a sensing device (34) for determining a milk characteristic in the course of milking the animal at the milking location (M).

6. An automatic milking arrangement according to claim 5, wherein the sensing device (34) is arranged to determine at least one of milk conductivity, milk flow rate, milk colour and/or milk temperature.

7. An automatic milking arrangement according to any one of the preceding claims, wherein the milk analysing means (60) is disposed at a milk analysing station (51) remote from the milking location (M).

8. An automatic milking arrangement according to any one of the preceding claims, wherein the milking arrangement is provided in a loose house accommodation wherein animals are free to walk into and away from feeding stations (35), each of at least some feeding stations (35) being designated a milking location (M) and including as well as a food table or feed trough (36) a respective retaining means (39, 81) for retaining an animal in the feeding station (35).

9. An automatic milking arrangement according to claim 8, wherein there are several stationary feeding stations (35) disposed in a linear or an annular array, the self-driven device (1) being movable along the array behind animals standing in feeding stations (35) to approach an animal occupying a milking location (M) and to be milked.

10. An automatic milking arrangement according to claim 8, wherein there are several feeding stations (35) disposed on a rotating platform (85) with zones (86, 89) at which animals can board the platform (85) to occupy a feeding station (35) and subsequently disembark from the platform (85), the self-driven device (1) being movable from a position away from the rotating platform (85) onto the platform (85) to approach an animal occupying a milking location (M).

11. An automatic milking arrangement according to any one of claims 8 to 10, wherein an animal identification system (38) is provided for identifying animals occupying the feeding stations (35), and a computer system (40, 41) for determining whether or not an animal identified at a milking location (M) is eligible to be milked.

12. An automatic milking arrangement according to any one of claims 8 to 11, including means (38) to identify an animal approaching a feeding station (35) that is not designated a milking location (M), and for barring or discouraging entry of the animal to that feeding station (35) if the animal is eligible to be milked.

13. An automatic milking arrangement according to any one of claims 8 to 12, including means (38) to identify an animal approaching a feeding station (35) designated a milking location (M) and for barring or discouraging entry of the animal to that feeding station (35) if the animal is not eligible to be milked or will not become eligible to be milked within a predetermined time.

14. A method of milking an animal comprising use of an automatic milking arrangement according to any one of the preceding claims.

## Patentansprüche

1. Automatische Melkanordnung, umfassend Melkplätze (M), die für einzelne Tiere zugänglich sind, eine Vorrichtung mit eigenem Antrieb (1) mit einem ferngesteuerten Lenksystem, damit ein Gerät zur Verwendung beim automatischen Melken eines Tiers, das sich an einem Melkplatz (M) befindet, zu dem Melkplatz (M) gebracht wird, Haltemittel (39, 81) zum automatischen Halten eines Tiers an dem Melkplatz (M) während des Melkens des Tiers und zum automatischen Entlassen des Tiers, damit das Tier den Melkplatz (M) verlassen kann, nachdem das Melken des Tiers beendet ist, und wobei die Vorrichtung mit eigenem Antrieb (1) und das Melkgerät von dem Melkplatz (M) weg bewegbar sind, wenn das Tier von den Haltemitteln (39, 81) gehalten wird, **gekennzeichnet durch** eine Vorrichtung zum Ermitteln, aus der von dem Tier, das an dem Melkplatz (M) gemolken wurde, gegebenen Milch, ob sich um das gemolkene Tier gekümmert werden muss oder es untersucht werden sollte, wobei die Haltemittel (39, 81) derart gesteuert werden, dass das gemolkene Tier an dem Melkplatz (M) gehalten und nicht automatisch entlassen wird, wenn ermittelt wird, dass sich um das Tier gekümmert werden muss oder es untersucht werden sollte, wobei die Vorrichtung zum Ermitteln, ob sich um das gemolkene Tier gekümmert werden muss oder es untersucht werden sollte, Milchanalysemittel (34, 60) zum Analysieren der Zusammensetzung der Milch umfasst, und wobei die Haltemittel (39, 81) derart gesteuert werden, dass ein gemolkenes Tier nicht automatisch von dem Melkplatz (M) entlassen wird, bis die Analyse der von dem Tier gegebenen Milch abgeschlossen wurde.

2. Automatische Melkanordnung nach Anspruch 1, wobei das Haltemittel (39, 81) so gesteuert ist, dass, wenn ein gemolkenes Tier gehalten und nicht automatisch entlassen wird, das gemolkene Tier von dem Haltemittel (39, 81) an dem Melkplatz (M) gehalten wird, bis es durch einen von einer Bedienperson ausgelösten Vorgang entlassen wird.

3. Automatische Melkanordnung nach Anspruch 2, wobei der von einer Bedienperson ausgelöste Vorgang ein Befehl ist, der über einen manuellen Bedienereingriff oder als ein sprachbasierter Befehl in eine Steuereinrichtung eingegeben wird.

4. Automatische Melkanordnung nach einem der vorhergehenden Ansprüche, wobei eine Signalerzeugungseinrichtung so angeordnet ist, dass sie ein Achtungssignal erzeugt, damit die Aufmerksamkeit eines Betreuers auf ein gemolkenes Tier gelenkt wird, das gehalten und nicht automatisch entlassen wird.

5. Automatische Melkanordnung nach einem der vorhergehenden Ansprüche, wobei die Vorrichtung zum Ermitteln, ob sich um das gemolkene Tier gekümmert werden muss oder es untersucht werden sollte, eine Erfassungsvorrichtung (34) zum Bestimmen einer Milcheigenschaft während des Melkens des Tiers an dem Melkplatz (M) umfasst.

6. Automatische Melkanordnung nach Anspruch 5, wobei die Erfassungsvorrichtung (34) so angeordnet ist, dass sie die Leitfähigkeit der Milch, den Milchdurchfluss, die Farbe der Milch und/oder die Temperatur der Milch bestimmt.

7. Automatische Melkanordnung nach einem der vorhergehenden Ansprüche, wobei das Milchanalysemittel (60) an einer Milchanalysestation (51) entfernt vom Melkplatz (M) angeordnet ist.

8. Automatische Melkanordnung nach einem der vorhergehenden Ansprüche, wobei die Melkanordnung in einer Laufstalleinrichtung vorgesehen ist, in der Tiere sich frei in Fütterungsstationen (35) hinein und aus ihnen heraus bewegen können, wobei jede von zumindest einigen Fütterungsstationen (35) als ein Melkplatz (M) bestimmt ist und zusätzlich zu einem Futtertisch oder Futtertrog (36) ein jeweiliges Haltemittel (39, 81) zum Halten eines Tiers in der Fütterungsstation (35) aufweist.

9. Automatische Melkanordnung nach Anspruch 8, bei der mehrere feststehende Fütterungsstationen (35) vorhanden und als lineare oder ringförmige Anordnung angeordnet sind, wobei die Vorrichtung mit eigenem Antrieb (1) hinter Tieren, die in Fütterungsstationen (35) stehen, die Anordnung entlang bewegbar ist und sich so einem Tier nähert, das sich an einem Melkplatz (M) befindet und gemolken werden soll.

10. Automatische Melkanordnung nach Anspruch 8, bei der mehrere Fütterungsstationen (35) vorhanden und auf einer Drehplattform (85) mit Bereichen (86, 89) angeordnet sind, in denen Tiere die Plattform (85) betreten und sich dann in einer Fütterungsstation (35) befinden und anschließend die Plattform (85) verlassen können, wobei die Vorrichtung mit eigenem Antrieb (1) aus einer Stellung in einer Entfernung zur Drehplattform (85) auf die Plattform (85) bewegbar ist und sich so einem Tier nähert, das sich an einem Melkplatz (M) befindet.

11. Automatische Melkanordnung nach einem der Ansprüche 8 bis 10, wobei ein Tiererkennungssystem (38) zum Erkennen von Tieren, die sich in den Fütterungsstationen (35) befinden, sowie ein Computersystem (40, 41) zum Bestimmen, ob ein an einem Melkplatz (M) erkanntes Tier gemolken werden darf, vorgesehen sind.

12. Automatische Melkanordnung nach einem der Ansprüche 8 bis 11, die Mittel (38) aufweist, um ein Tier zu erkennen, das sich einer Fütterungsstation (35) nähert, die nicht als Melkplatz (M) bestimmt ist, und um das Tier daran zu hindern oder davon abzuhalten, diese Fütterungsstation (35) zu betreten, wenn das Tier gemolken werden darf.

13. Automatische Melkanordnung nach einem der Ansprüche 8 bis 12, die Mittel (38) aufweist, um ein Tier zu erkennen, das sich einer Fütterungsstation (35) nähert, die als Melkplatz (M) bestimmt ist, und um das Tier daran zu hindern oder davon abzuhalten, diese Fütterungsstation (35) zu betreten, wenn das Tier nicht gemolken werden darf oder nicht innerhalb eines vorgegebenen Zeitraums gemolken werden darf.

14. Verfahren zum Melken eines Tiers, das die Verwendung einer automatischen Melkanordnung nach einem der vorhergehenden Ansprüche umfasst.

## Revendications

1. Système de traite automatique comprenant des emplacements de traite (M) accessibles à des animaux individuels,
un dispositif autopropulsé (1) avec un système de guidage à commande à distance destiné à amener à un emplacement de traite (M) un appareil destiné à être utilisé pour la traite automatique d'un animal situé à l'emplacement de traite (M), des moyens de retenue (39, 81) destinés à retenir automatiquement un animal à l'emplacement de traite (M) pendant la traite de l'animal et à libérer automatiquement l'animal pour permettre à l'animal de quitter l'emplacement de traite (M) une fois la traite de l'animal terminée,
et le dispositif autopropulsé (1) et l'appareil de traite pouvant être éloignés de l'emplacement de traite (M) quand l'animal est retenu par les moyens de retenue (39, 81),
**caractérisé par** un dispositif destiné à déterminer, à partir du lait produit par l'animal trait à l'emplacement de traite (M), si l'animal trait requiert de l'attention ou devrait être examiné, les moyens de retenue (39, 81) étant commandés de telle manière que l'animal trait est retenu à l'emplacement de traite (M) et n'est pas automatiquement libéré quand il est déterminé que l'animal requiert de l'attention ou devrait être examiné, dans lequel le dispositif pour déterminer si l'animal trait requiert de l'attention ou devrait être examiné comprend des moyens d'analyse (34, 60) pour analyser la composition du lait, et dans lequel les moyens de retenue (39, 81) sont commandés de telle sorte qu'un animal ne peut pas être libéré automatiquement de l'emplacement de traite (M) jusqu'à ce que l'analyse du lait produit par l'animal soit terminée.

2. Système de traite automatique selon la revendication 1, dans lequel le moyen de retenue (39, 81) est commandé de telle manière que, quand un animal trait est retenu et qu'il n'est pas automatiquement libéré, l'animal trait est retenu à l'emplacement de traite (M) par le moyen de retenue (39, 81) jusqu'à ce qu'il soit libéré par une action entreprise par un opérateur.

3. Système de traite automatique selon la revendication 2, dans lequel l'action entreprise par l'opérateur est une commande entrée dans un dispositif de commande par une action manuelle d'un opérateur ou sous la forme d'une commande activée par la voix.

4. Système de traite automatique selon l'une quelconque des revendications précédentes, dans lequel un dispositif de génération de signal est agencé pour générer un signal d'attention afin d'attirer l'attention d'un superviseur sur un animal trait qui est retenu et non libéré automatiquement.

5. Système de traite automatique selon l'une quelconque des revendications précédentes, dans lequel le dispositif destiné à déterminer si l'animal requiert de l'attention ou devrait être examiné comprend un dispositif de détection (34) destiné à déterminer une caractéristique du lait au cours de la traite de l'animal à l'emplacement de traite (M).

6. Système de traite automatique selon la revendication 5, dans lequel le dispositif de détection (34) est agencé pour déterminer la conductivité du lait, le débit du lait, la couleur du lait et/ou la température du lait.

7. Système de traite automatique selon l'une des quelconques revendications précédentes, dans lequel le moyen d'analyse du lait (60) est disposé sur une station d'analyse du lait (51) à distance de l'emplacement de traite (M).

8. Système de traite automatique selon l'une quelconque des revendications précédentes, dans lequel le système de traite est situé dans un local de stabulation libre dans lequel des animaux sont libres d'entrer dans des stations de distribution de nourriture (35) et d'en sortir, chacune d'au moins quelques stations de distribution de nourriture (35) étant désignée comme emplacement de traite (M) et comportant en plus d'une table de nourriture ou mangeoire (36) un moyen de retenue (39, 81) respectif destiné à retenir un animal dans la station de distribution de nourriture (35).

9. Système de traite automatique selon la revendication 8, dans lequel il y a plusieurs stations de distribution de nourriture (35) stationnaires disposées dans un groupement linéaire ou annulaire, le dispositif autopropulsé (1) étant mobile le long du groupement derrière des animaux se trouvant dans des stations de distribution de nourriture (35) pour approcher un animal qui occupe un emplacement de traite (M) et qui est à traire.

10. Système de traite automatique selon la revendication 8, dans lequel il y a plusieurs stations de distribution de nourriture (35) disposées sur une plate-forme rotative (85) avec des zones (86, 89) sur lesquelles des animaux peuvent embarquer sur la plate-forme (85) afin d'occuper une station de distribution de nourriture (35) et débarquer ensuite de la plate-forme (85), le dispositif autopropulsé (1) étant mobile d'une position éloignée de la plate-forme rotative (85) sur la plate-forme (85) pour approcher un animal occupant un emplacement de traite (M).

11. Système de traite automatique selon l'une quelconque des revendications 8 à 10, dans lequel un système d'identification d'animal (38) est prévu pour identifier des animaux qui occupent les stations de distribution de nourriture (35), et un système informatique (40, 41) pour déterminer si un animal identifié à un emplacement de traite (M) est autorisé à être trait ou non.

12. Système de traite automatique selon l'une quelconque des revendications 8 à 11, comportant des moyens (38) destinés à identifier un animal approchant une station de distribution de nourriture (35) qui n'est pas désignée comme emplacement de traite (M), et pour empêcher ou décourager l'entrée de l'animal dans cette station de distribution de nourriture (35) si l'animal est autorisé à être trait.

13. Système de traite automatique selon l'une quelconque des revendications 8 à 12, comportant des moyens (38) destinés à identifier un animal approchant une station de distribution de nourriture (35) qui est désignée comme emplacement de traite (M), et pour empêcher ou décourager l'entrée de l'animal dans cette station de distribution de nourriture (35) si l'animal n'est pas autorisé à être trait ou ne sera pas autorisé à être trait dans un temps prédéfini.

14. Procédé de traite d'un animal comprenant l'utilisation d'un système de traite automatique selon l'une quelconque des revendications précédentes.
